# EUROPEAN PATENT APPLICATION

(11) **EP 4 822 430 A1**
(43) Date of publication of application: **14.10.2026**
(21) Application number: 25169971.6
(22) Date of filing: 11.04.2025
(51) Int. Cl.: G02F 1/01, G02F 1/225

(54) **INTEGRATED OPTICAL STRUCTURE AND METHOD OF FABRICATING AN INTEGRATED OPTICAL STRUCTURE**

(71) Applicant: Imec VZW, 3001 Leuven (BE)
(72) Inventor: Deng, Qingzhong, 3050 Oud-Heverlee (BE); Van Campenhout, Joris, 3001 Leuven (BE); Marchese, Chiara, 1200 Woluwe-Saint-Lambert (BE); Haffner, Christian, 3001 Heverlee (BE); Ferraro, Filippo Jacopo, 1040 Etterbeek (BE); Verheyen, Peter, 2560 Nijlen (BE)
(74) Representative: Roth, Sebastian

(57) **Abstract**

The disclosure relates to an integrated optical structure (10). The integrated optical structure (10) comprises an optical waveguide structure (11); a beam structure (12) which is suspended at a first distance to the optical waveguide structure (11), wherein the beam structure (12) comprises a first section (12A) of a first material and a second section (12B) of a second material, wherein the first material is a conductive material and the second material is a non-conductive material or a semiconductor; an electrode structure (21) arranged at a second distance to the beam structure (12); and an electrical contact structure configured to apply a voltage between the electrode structure (21) and the first section (12A) of the beam structure (12) inducing an electrostatic force acting between the electrode structure (21) and the first section (12A); wherein the beam structure (12) is designed to be elastically bent towards or away from the optical waveguide structure (11) by the electrostatic force causing a change in an optical property, in particular a phase, of an optical signal propagating through the optical waveguide structure (11).

## Description

### TECHNICAL FIELD

The present disclosure relates to light modulation in optical interconnects. More specifically, the present disclosure relates to an integrated optical structure for light modulation and to a method of fabricating such an integrated optical structure.

### BACKGROUND

Optical interconnects are systems for propagating optical signals within an integrated circuit. Such optical interconnects require efficient and compact optical modulators for modulating optical properties of a propagating light beam, e.g. its amplitude, polarization or phase. Silicon (Si) carrier-based modulators with p-n junctions are today's workhorse for optical interconnects in integrated circuits. While p-n junction based modulators are relatively fast, they achieve only weak phase modulations.

Furthermore, resonance-based devices, such as Si ring modulators, are prone to fabrication and thermally induced variations of their operating wavelengths. These variations can be controlled by phase tuning elements. This is typically done with thermo-optic phase tuners which use local heaters. For instance, metallic heaters for thermo-optic phase turning allow for relatively large phase changes (due to large changes in refractive index caused by temperature changes, e.g., Δn_{eff} ~ 10⁻²), but are relatively slow (typically few kHz to MHz) and suffer from a high power consumption (typically several mW).

### SUMMARY

In view of the above, it is an objective to provide an improved optical structure and an improved method of fabricating an optical structure, which avoid the above-mentioned disadvantages. A particular objective is to provide an integrated optical structure for light modulation which offers fast modulation speed and low power consumption.

These and other objectives are achieved by the solutions of this disclosure, as described in the independent claims. Advantageous implementations are described in the dependent claims.

According to a first aspect, the present disclosure relates to an integrated optical structure. The integrated optical structure comprises an optical waveguide structure; a beam structure which is suspended at a first distance to the optical waveguide structure, wherein the beam structure comprises a first section of a first material and a second section of a second material, wherein the first material is a conductive material and the second material is a non-conductive material or a semiconductor; an electrode structure arranged at a second distance to the beam structure; and an electrical contact structure configured to apply a voltage between the electrode structure and the first section of the beam structure inducing an electrostatic force acting between the electrode structure and the first section; wherein the beam structure is designed to be elastically bent towards or away from the optical waveguide structure by the electrostatic force causing a change in an optical property, in particular a phase, of an optical signal propagating through the optical waveguide structure.

This achieves the advantage that an optical modulator, in particular a phase shifter, is provided which achieves a relatively fast modulation of the optical signal and has a low power consumption. In particular, the integrated optical structure requires less power and offers faster speeds than a conventional thermo-optic phase tuner. For example, the integrated optical structure requires zero or very low static power and offers MHz to sub-GHz speeds. At the same time, the integrated optical structure enables phase shifting with very low optical losses.

The integrated optical structure can form an optical modulator, in particular a phase tuner. The phase tuner can be a nano-electro-opto-mechanical (NOEM) phase tuner.

For example, when bending the beam structure towards or away the optical waveguide structure, the reduction or increase respectively of the distance between the waveguide structure and the beam structure changes an effective refractive index (n_{eff}) or more specifically a mode index as experienced by the optical signal propagating through the waveguide structure. This in-turn causes the change in the optical parameter (e.g., phase) of the optical signal.

Besides the phase also other parameters of the optical signal, such as amplitude or polarization, could be influenced and/or changed by the change in distance between the waveguide structure and the beam structure.

The beam structure can be designed to have an elastic modulus that allows it to be bent by the electrostatic force by such a degree that a tangible change of the optical property of the optical signal occurs.

The electrical contact structure can comprise a number of metallic contacts and electrical lines, which connect to the electrode structure and the beam structure, in particular the first section of the beam structure. The electrical contact structure can be connected to a voltage source for generating the voltage. The voltage source can be an external voltage source or can be a component of the optical structure.

The optical waveguide structure (in the following sometimes referred to as: waveguide structure) can comprise or can form an optical waveguide, wherein the optical signal propagates through the optical waveguide.

The optical waveguide structure can be made of silicon.

The beam structure can be arranged in a parallel orientation to the optical waveguide structure. For instance, the beam structure is suspended at the distance above or below the optical waveguide structure.

The components of the integrated optical structure can be fabricated onto a single substrate material (e.g., a silicon substrate). For instance, this "integration" of the components in a single substrate allows for a compact structure which can be efficiently fabricated using semiconductor processing technologies (e.g., layer deposition and etching techniques).

In an implementation form of the first aspect, the optical waveguide structure is not in physical contact with the electrode structure.

In an implementation form of the first aspect, the beam structure is suspended on one end; wherein the first section is arranged towards the suspended end and/or the second section is arranged towards a free end of the beam structure. This achieves the advantage that the beam structure can efficiently bend towards or away from the electrode structure.

For example, the beam structure is a cantilever structure. Alternatively, the beam structure could be suspended on two opposite ends.

In an implementation form of the first aspect, the second section is arranged directly above or below the optical waveguide structure if the beam structure is not bent.

For instance, the first and second sections are arranged on the beam structure in such a manner that the second section is closer to the waveguide structure than the first section both in the bent and non-bent state of the beam structure.

In an implementation form of the first aspect, the first material is a metal or doped semiconductor, in particular doped silicon.

In an implementation form of the first aspect, the second material is silicon oxide or silicon nitride. For example, the second material is a low-loss optical material. This achieves the advantage that optical losses due to the proximity of the bent beam structure to the waveguide structure can be reduced.

In an implementation form of the first aspect, the beam structure comprises a base structure; wherein the first section and/or the second section are embedded in the base structure.

In an implementation form of the first aspect, the base structure is made of the same material as the second section. This achieves the advantage that the beam structure is easy to fabricate and/or that optical losses can be further reduced.

In an implementation form of the first aspect, the integrated optical structure further comprises a supporting structure; wherein the beam structure is anchored to the supporting structure; and wherein the optical waveguide structure and/or the electrode structure are arranged in or on the supporting structure.

The supporting structure can be a part of an encapsulation structure which surrounds the beam structure on at least three sides.

In an implementation form of the first aspect, the electrode structure is arranged at the same side of the beam structure as the optical waveguide structure, or the electrode structure and the optical waveguide structure are arranged on opposite sides of the beam structure.

In an implementation form of the first aspect, the integrated optical structure comprises a further electrode structure arranged at a third distance to the beam structure on a side which is opposite to the electrode structure.

In an implementation form of the first aspect, the electrical contact structure is configured to apply a further voltage between the further electrode structure and the first section of the beam structure inducing a further electrostatic force acting between the further electrode and the first section; wherein the beam structure is designed to be elastically bent towards or away from the further electrode structure by the further electrostatic force.

In an example, the optical waveguide structure is arranged in a closed loop forming a ring or disk waveguide.

According to a second aspect, the present disclosure relates to an optical communication device comprising the integrated optical structure of the first aspect of the present disclosure.

In an implementation form of the second aspect, the optical communication device is a Mach-Zehnder interferometer or an optical resonator, in particular a ring resonator.

According to a third aspect, the present disclosure relates to a method of fabricating an integrated optical structure. The method comprises: forming an optical waveguide structure; forming a beam structure which is suspended at a first distance to the optical waveguide structure, wherein the beam structure comprises a first section of a first material and a second section of a second material, wherein the first material is a conductive material and the second material is a non-conductive material or a semiconductor; forming an electrode structure arranged at a second distance to the beam structure; and forming an electrical contact structure which is configured to apply a voltage between the electrode structure and the first section of the beam structure inducing an electrostatic force acting between the electrode structure and the first section; wherein the beam structure is designed to be elastically bent towards or away from the optical waveguide structure by the electrostatic force causing a change in an optical property, in particular a phase, of an optical signal propagating through the optical waveguide structure.

In an implementation form of the third aspect, the beam structure is formed in a parallel orientation to the optical waveguide structure; wherein a sacrificial structure is formed around a section of the beam structure; and wherein at least a part of the sacrificial structure is arranged between the beam structure and the optical waveguide structure.

In an implementation form of the third aspect, the method further comprises forming an encapsulation structure around the optical waveguide structure, the beam structure and the sacrificial structure; and selectively removing the sacrificial structure to generate a cavity in the encapsulation structure, wherein the beam structure is suspended in the cavity.

In an implementation form of the third aspect, the optical waveguide structure is not in physical contact with the electrode structure.

In an implementation form of the third aspect, the beam structure is suspended on one end; wherein the first section is arranged towards the suspended end and/or the second section is arranged towards a free end of the beam structure.

In an implementation form of the third aspect, the second section is arranged directly above or below the optical waveguide structure if the beam structure is not bent.

In an implementation form of the third aspect, the first material is a metal or doped semiconductor, in particular doped silicon.

In an implementation form of the third aspect, the second material is silicon oxide or silicon nitride.

In an implementation form of the third aspect, the beam structure comprises a base structure; wherein the first section and/or the second section are embedded in the base structure.

In an implementation form of the third aspect, the base structure is made of the same material as the second section.

In an implementation form of the third aspect, the method comprises forming a supporting structure; wherein the beam structure is anchored to the supporting structure; and wherein the optical waveguide structure and/or the electrode structure are arranged in or on the supporting structure.

In an implementation form of the third aspect, the electrode structure is arranged at the same side of the beam structure as the optical waveguide structure, or the electrode structure and the optical waveguide structure are arranged on opposite sides of the beam structure.

In an implementation form of the third aspect, the method comprises forming a further electrode structure arranged at a third distance to the beam structure on a side which is opposite to the electrode structure.

In an implementation form of the third aspect, the electrical contact structure is configured to apply a further voltage between the further electrode structure and the first section of the beam structure inducing a further electrostatic force acting between the further electrode and the first section; wherein the beam structure is designed to be elastically bent towards or away from the further electrode structure by the further electrostatic force.

For example, the method according to the third aspect of the disclosure can be used to fabricate the integrated optical structure according to the first aspect of the disclosure.

### BRIEF DESCRIPTION OF THE DRAWINGS

The above described aspects and implementations are explained in the following description of embodiments with respect to the enclosed drawings:
- FIG. 1: shows a schematic diagram of an integrated optical structure according to an embodiment;
- FIGS. 2-7: each show a schematic diagram of an integrated optical structure according to an embodiment;
- FIG. 8A: shows a perspective view of an integrated optical structure according to an embodiment;
- FIG. 8B: shows a simulation of a displacement of a beam structure of the integrated optical structure shown in FIG. 8A;
- FIG. 9: shows simulation results of optical phase shifts and optical losses in exemplary integrated optical structures;
- FIG. 10: shows a schematic diagram of an optical communication device according to an embodiment; and
- FIG. 11: shows steps of a method for fabricating an integrated optical structure according to an embodiment.

### DETAILED DESCRIPTION OF EMBODIMENTS

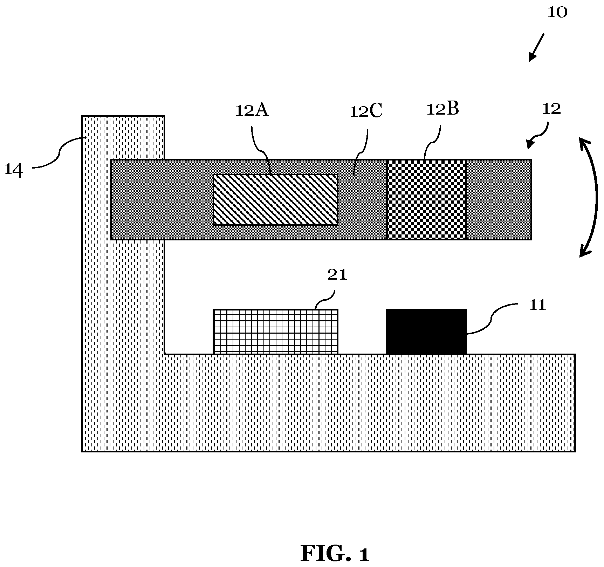

FIG. 1 shows a schematic diagram of an integrated optical structure 10 according to an embodiment.

The integrated optical structure 10 comprises an optical waveguide structure 11; a beam structure 12 which is suspended at a first distance to the optical waveguide structure 11, wherein the beam structure 12 comprises a first section 12A of a first material and a second section 12B of a second material, wherein the first material is a conductive material and the second material is a non-conductive material or a semiconductor. The integrated optical structure 10 further comprises an electrode structure 21 arranged at a second distance to the beam structure 12; and an electrical contact structure configured to apply a voltage between the electrode structure 21 and the first section 12A of the beam structure 12 inducing an electrostatic force acting between the electrode structure 21 and the first section 12A; wherein the beam structure 12 is designed to be elastically bent towards or away from the optical waveguide structure 11 by the electrostatic force causing a change in an optical property, in particular a phase, of an optical signal propagating through the optical waveguide structure 11.

Thereby, Fig. 1 shows a cross-sectional view along a plane, which is perpendicular to a direction in which the optical waveguide structure 11 runs, i.e., perpendicular to the direction in which the optical signal is guided by the waveguide structure 11.

The integrated optical structure 10 can form an optical modulator, in particular a phase tuner or phase shifter. The phase tuner can be a nano-electro-opto-mechanical (NOEM) phase tuner. The optical waveguide structure 11 can be connected to or be a component of an optical interconnect, e.g., in an integrated circuit.

Advantageously, the integrated optical structure 10 requires less power and offers faster modulation speeds than a conventional thermo-optic phase tuner. For example, the integrated optical structure 10 requires zero or very low static power and offers MHz to sub-GHz speeds for "switching" the optical property, wherein a conventional thermo-optic phase tuner operates at speeds of a few kHz to MHz and has a high power consumption of e.g. several mW.

The optical waveguide structure 11 can be made of silicon and surrounded by low refractive index material(s).

The optical waveguide structure 11 can comprise or can form an optical waveguide, wherein the optical signal propagates through the optical waveguide.

The beam structure 12 can form an actuating element. For instance, the beam structure 12 is arranged in parallel to a surface of the optical waveguide structure 11. The beam structure 12 can be suspended at the first distance above the optical waveguide structure 11.

The beam structure 12 can be suspended on one end as shown in FIG. 1. Thereby, the first section 12A can be arranged towards the suspended end and the second section 12B can be arranged towards a free end of the beam structure 12. Thus, the beam structure 12 can be a cantilever which can efficiently bend towards and/or away from the waveguide structure 11, as indicated by the arrow in FIG. 1.

Alternatively, the beam structure could be suspended on two opposite ends. In this case, the second section 12B of the beam structure may be arranged away from the two suspended ends, e.g., towards the center between the two opposite suspended ends of the beam structure 12.

The optical signal can be an electromagnetic wave which propagates through the waveguide structure 11. Thereby, a portion of the energy density of the electromagnetic wave can be located outside of the waveguide structure 11 and is thus influenced by the surrounding of the waveguide structure 11. The reduction or increase of the distance between the waveguide structure 11 and the beam structure 12, in particular the second section 12B of the beam structure, changes the immediate surrounding of the waveguide structure 11 and can therefore affect the optical properties, especially the phase, of the optical signal.

In particular, when the voltage is applied, the beam structure 12 is bent towards or away from the waveguide structure 11 by the electrostatic force. The resulting reduction or increase of the distance between the waveguide structure 11 and the beam structure 12, in particular the second section 12B of the beam structure, can change an effective refractive index (n_{eff}) or more specifically a mode index as experienced by (at least a part of) the optical signal propagating through the waveguide structure 11. This can in-turn cause the change in the optical parameter (e.g., phase) of the optical signal. Thereby, the change of n_{eff} (also referred to as: Δn_{eff}) as experienced by the optical signal can be stronger than in a conventional p-n junction based phase tuner. For instance, the Δn_{eff} in the integrated optical structure 10 is between 10⁻³ and 10⁻¹.

When the voltage is switched off again, the beam structure 12 can return to its initial straight (i.e., non-bent) orientation. A distinction can therefore be made between two switching states of the integrated optical structure 10, wherein each switching state can be associated with a different n_{eff}.

The second section 12B of the beam structure can be arranged directly above or below the optical waveguide structure 11 if the beam structure is not bent.

For instance, the first section 12A of the beam structure is placed close to the electrode structure 21, where "close" means that the first section 12A (and thus the beam 12) will be displaced by the electrostatic forces if two different voltages are applied to 12A and 21. The second section 12B of the beam structure 12 is placed close to the waveguide structure 11, where "close" means that the effective refractive index of the light propagating in the waveguide structure 11 will change when the second section 12B is displaced together with the beam 12 (or parts thereof).

The first material of the first section 12A can be a metal or doped semiconductor, in particular doped silicon. The first section 12A can form a counter electrode to the electrode structure 21.

The second material of the second section 12B can be a low-loss optical material. For instance, the second material is a silicon oxide or silicon nitride. Since the second section 12B is preferably closest to the waveguide structure 11 and its movement is mostly responsible for the change of the effective reflective index (and thus phase modulation), designing this section from a low-loss optical material strongly reduces optical losses in the integrated optical structure 10.

The beam structure 12 can comprises a base structure 12C; wherein the first section 12A and/or the second section 12B are embedded in the base structure 12C. For instance, the base structure 12C is a membrane.

The base structure 12C (or membrane) can be made of the same material as the second section 12B of the beam structure 12, i.e., a low-loss optical material such as silicon oxide.

The integrated optical structure 10 can further comprise a supporting structure 14. The beam structure 12, in particular the base structure 12C of the beam structure 12, can be anchored to the supporting structure on one end. The supporting structure 14 can be a part of an encapsulation structure which surrounds the beam structure on at least three sides.

The optical waveguide structure 11 and the electrode structure 21 can be arranged on the supporting structure 14, as shown in FIG. 1. For instance, the electrode structure 21 is formed by a conductive pad.

For instance, at least a part of the beam structure 12 is movable relative to the supporting structure 14. The first and second section 12A, 12B of the beam structure are arranged in the movable region and are mechanically connected via the base structure 12C (e.g., membrane) so that the moving of one of them will cause the movement of the other one.

The beam structure 12 can be designed to have an elastic modulus that allows it to be bent by the electrostatic force by such a degree that a tangible change of the optical property of the optical signal occurs.

The electrical contact structure (not shown in FIG. 1) can comprise a number of (vertical) electrical lines, which are electrically connected to the electrode structure 21 and the first section 12A of the beam structure 12. The electrical lines can be formed from a metal, such as tungsten or copper. The electrical contact structure can further be connected to a voltage source for generating the voltage, e.g. via electrical contact pads. The voltage source can be an external voltage source or can be a component of the optical structure. For instance, the electrical contact structure can apply a bias voltage (V_{Bias}) to the electrode structure 21 and connect the first section 12A to ground (GND), or vice versa.

Preferably, the optical waveguide structure 11 is not in physical contact with the electrode structure 21. This further reduces optical losses in the waveguide structure 11.

For example, the first distance between the optical waveguide structure 11 and the beam structure 12 is less than 300 nm, preferably less than 200 nm. This distance can refer to the minimal distance between both structures 11, 12 if no voltage (V_{Bias}) is applied and thus if the beam structure 12 is not bent towards or away from the waveguide structure 11. When applying the voltage, the structure 12 can be bent towards or away from the waveguide structure 11, reducing or increasing this distance, respectively. The second distance can be identical to the first distance or deviate from the first distance by only a few nanometers, especially if the waveguide structure 11 and the electrode structure 21 are formed in the same plane of the integrated optical structure 10.

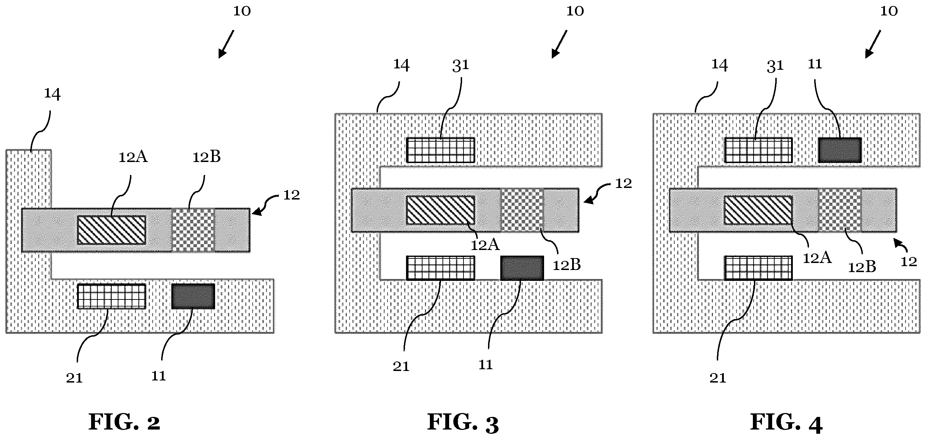

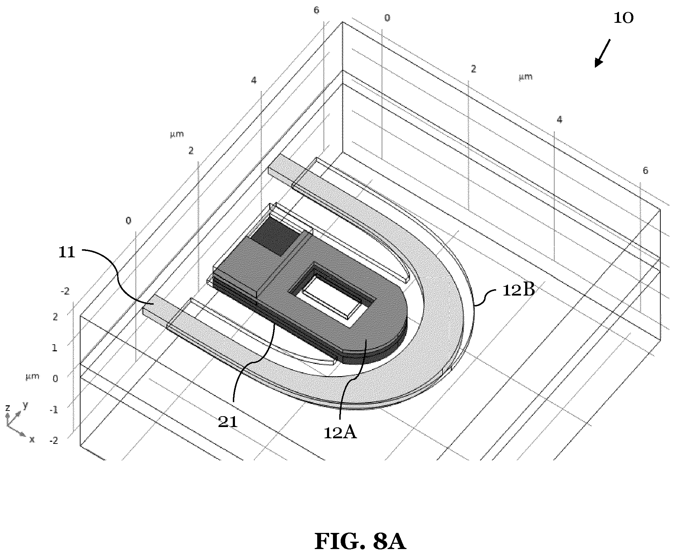

FIGS. 2 to 8A show exemplary embodiments of the integrated optical structure 10, which build on the integrated optical structure 10 shown in FIG. 1. Same elements are labelled with the same reference signs. Hereinafter, only the differences between FIG. 1 and FIGS. 2 to 8A are explained. Each of FIGS. 2-7 shows again a cross-sectional view of the integrated optical structure 10 while FIG. 8A shows a perspective view of the integrated optical structure 10.

In the exemplary embodiment shown in FIG. 2, the waveguide structure 11 and the electrode structure 21 are embedded in the supporting structure 14.

FIG. 3 shows a further example of the optical structure 10 which comprises a further electrode structure 31 arranged at a third distance to the beam structure on a side which is opposite to the electrode structure 21. For example, the third distance can be identical to the second distance or can deviate from the second distance by a few nanometers.

The electrical contact structure can be configured to apply a further voltage between the further electrode structure 31 and the first section 12A of the beam structure 12 inducing a further electrostatic force acting between the further electrode and the first section 12A. The beam structure 12 can be designed to be elastically bent towards or away from the further electrode 31 structure by the further electrostatic force.

For instance, the beam structure 12 can be switched between a first state in which it bends towards the electrode structure 21 and a second state in which it bends away from the electrode structure 21 and towards the further electrode structure 31, or vice versa. In this way, a difference in n_{eff} (and thus in the optical property) can be enhanced between both states.

In the exemplary embodiment shown in FIG. 4, the waveguide structure 11 and the electrode structure 21 are arranged on opposite sides of the beam structure 12. In this example, the optical structure 10 comprises the further electrode structure 31, which is now on the same side of the beam structure 12 than the waveguide structure. However, the further electrode structure 31 is only optional here and could also be omitted.

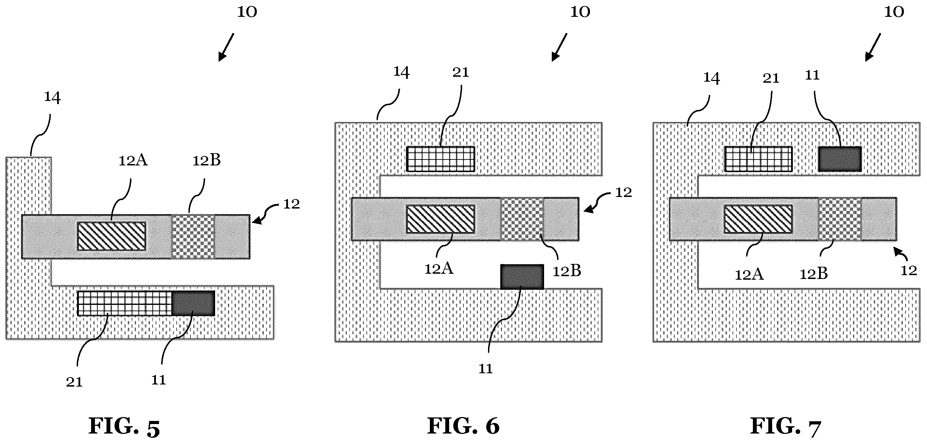

FIG. 5 shows an example, where the electrode structure 21 and the waveguide structure 11 are in direct physical contact with each other.

In the example shown in FIG. 6, the electrode structure 21 and the waveguide structure are arranged on opposite sides of the beam structure 12 (similar to FIG. 4, but without the further electrode structure 31).

FIG. 7 shows an example, where both the electrode structure 21 and the waveguide structure 11 are arranged on an upper side of the beam structure 12. However, upper and lower are hereby relative terms, as the integrated optical structure 10 could be arranged in different orientations and rotations, or installed in various ways.

In summary, in the integrated optical structure, as shown in any one of FIGS. 1-7, the optical waveguide 11 is used to propagate light, while the light phase can be tuned by applying a voltage difference between the first section 12A and the electrode structures 21 and/or 31. The optical structure 10 has a low-power consumption, because this design consumes power only when the beam structure 12 is moving, and no power consumption after the beam structure 12 is regulated to the desired position. Furthermore, the optical structure 10 exhibits low optical losses, because the second section 12B, which causes the phase change, is constructed from low-loss optical materials.

Optionally, the optical waveguide structure 11 could comprise a p-n-junction. The p-n-junction can be formed by an interface of a n-type semiconductor material and a p-type semiconductor material (e.g., n- and p-doped silicon). For example, a part of the waveguide structure 11 is formed from the n-type material and a part of the waveguide structure 11 is formed from the p-type material, wherein a vertical p-n-junction is formed at an interface of these materials. The n-type doped material and the p-type doped material can be connected to respective electrical lines of the electrical contact structure. The electrical contact structure can be configured to apply a control voltage to the p-n-junction causing an additional change in the optical property of the optical signal propagating through the waveguide structure. The control voltage can be a pulsed or AC-type voltage with a frequency of e.g. >10 GHz.

In this way, the advantages of the optical modulation by the bending beam structure 12 and by the p-n-junction could be combined in a single, integrated structure 10. The p-n-junction can offer fast modulation speeds (e.g., tens of GHz) with weaker phase tuning (e.g., Δn_{eff} ~ 10⁻⁴), while the bending beam structure 12 can offer moderate modulation speeds (e.g., MHz to sub-GHz) with higher phase changes (e.g., Δn_{eff} ~10⁻³ - 10⁻¹). Furthermore, both of these modulation techniques require relatively little power, especially compared to conventional thermo-optic modulators.

FIG. 8A shows a perspective view of the integrated optical structure 10 according to an embodiment. In this example, the waveguide structure 11 runs in a semicircle around the electrode structure 21. The beam structure can be a disk-shaped structure above the waveguide structure 11, wherein the first section 12A is arranged above the electrode structure 21, and the second section 12B (which is transparent in FIG. 8A) is arranged above the waveguide structure 11.

Alternatively, the optical waveguide structure 11 could also be arranged in a closed loop forming a ring waveguide. In this example, the integrated optical structure could further comprise at least one waveguide which is arranged to pass by the ring waveguide. Thereby, light with a wavelength that corresponds to a resonance wavelength of the ring waveguide can be coupled from the waveguide into the ring waveguide, or vice versa.

In the design example of FIG. 8A, the base material of the beam structure 12 is formed by silicon oxide that is also used for the supporting structure. The first section 12A of the beam structure 12 is formed by doped polycrystalline silicon, and the second section 12B is formed by silicon oxide. The electrode structure 21 is formed by doped crystalline silicon, and the waveguide structure 11 is formed by intrinsic crystalline silicon. The same materials for these elements could also be used in any one of the exemplary embodiments of the optical structure 10 as shown in FIGS. 1-7.

The working principle of the optical structure 10 shown in FIG. 8A remains the same, i.e., the beam structure 12 bends when a voltage difference is applied between the first section 12A and the electrode structure 21. The bending of the beam structure 12 brings the second section 12B closer to the waveguide structure 12, which results in optical phase shift.

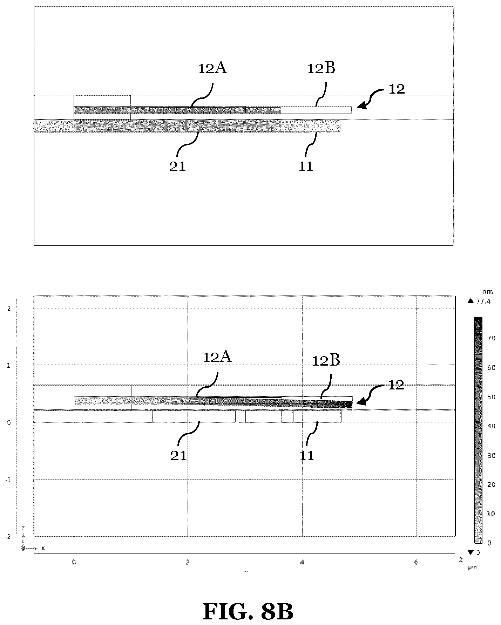

FIG. 8B shows a simulation of a displacement of the beam structure 12 of the integrated optical structure 10 shown in FIG. 8A. The two images in FIG. 8B show a side-view of the integrated optical structure 10.

In the top image of FIG. 8B, no voltage is applied between the first section 12A and the electrode structure 21, such that the beam structure 12 is not displaced. In the bottom image of FIG. 8B, a driving voltage of 17.89 V is applied between the first section 12A and the electrode structure 21, causing a displacement of the beam structure 12.

In these simulations, the thickness of the electrode structure 21 and the waveguide structure 11 was 210 nm, the silicon oxide thickness above the structures 11 and 12 was 10 nm, the air gap between the waveguide structure 11 and the beam structure 12 was 100 nm, the thickness of the beam structure 12 was 130 nm, and the thickness of the first section 12A was 100 nm with 15 nm distance to the bottom of the beam structure 12.

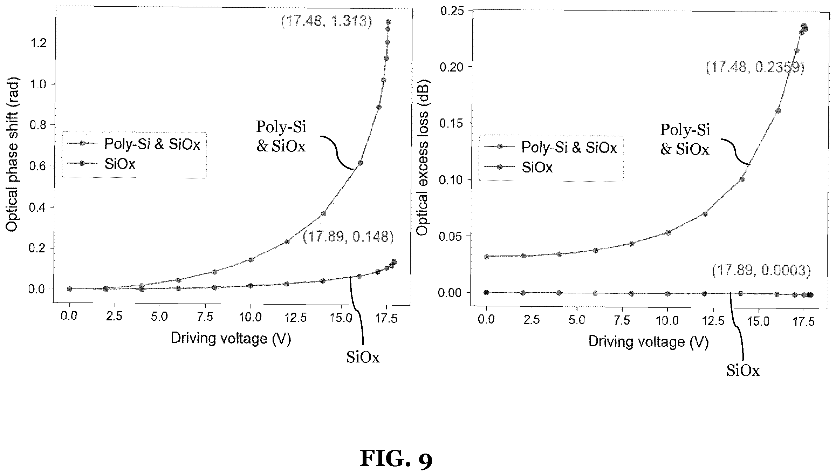

FIG. 9 shows simulation results of optical phase shifts and optical losses in exemplary integrated optical structures. The optical phase shifting and the excess loss was simulated under different driving voltages for two different structures.

The simulations were carried out with the following integrated optical structures:
- One structure having a beam structure with a second section 12B made from silicon oxide (SiOx), i.e., a low loss optical material (referred to as "SiOx" in FIG. 9), and
- a reference optical structure in which the second section 12B is made from intrinsic poly-Si, i.e., a "high loss" optical material (referred to as "Poly-Si & SiOx" in FIG. 9).

The simulation results show that the usage of poly-Si for the second section 12B (i.e., for the part of the beam that is closest to the waveguide) might lead to a strong phase shift, but also causes strong optical excess losses, especially at high voltages. In contrast, the use of a low-loss optical material, such as silicon oxide, for the second section 12B significantly reduces the optical excess losses and still allows for an optical phase shift at certain voltages.

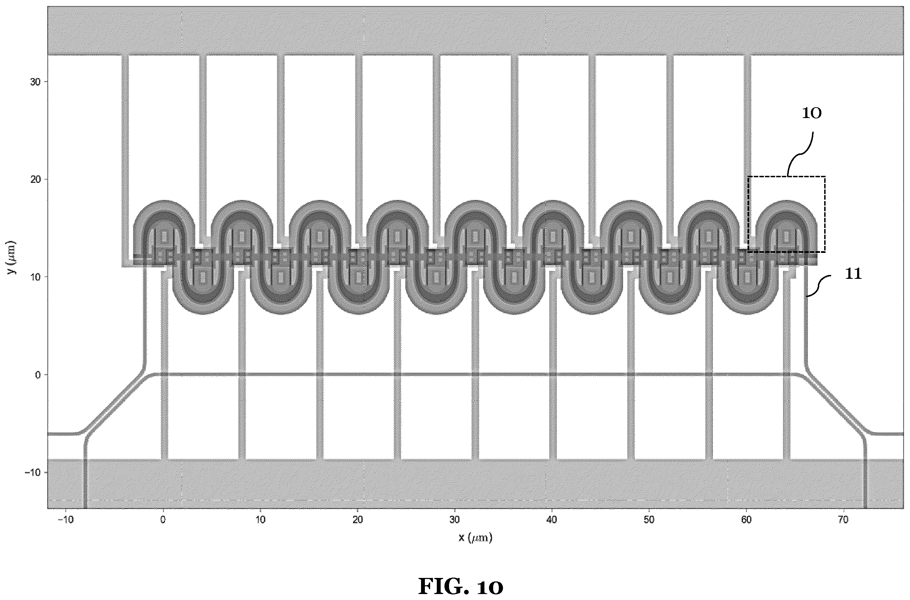

FIG. 10 shows a schematic diagram of an optical communication device according to an embodiment, which comprises a plurality of the integrated optical structures 10.

The optical communication device shown in FIG. 10 is a Mach-Zehnder interferometer with integrated optical structures 10 that are arranged in a cascaded manner. Based on the number of cascades, phase shifts of varying degrees can be achieved.

Besides the Mach-Zehnder interferometer, the integrated optical structure 10 could also be integrated in a ring resonator, a ring modulator or a micro ring-disk modulator.

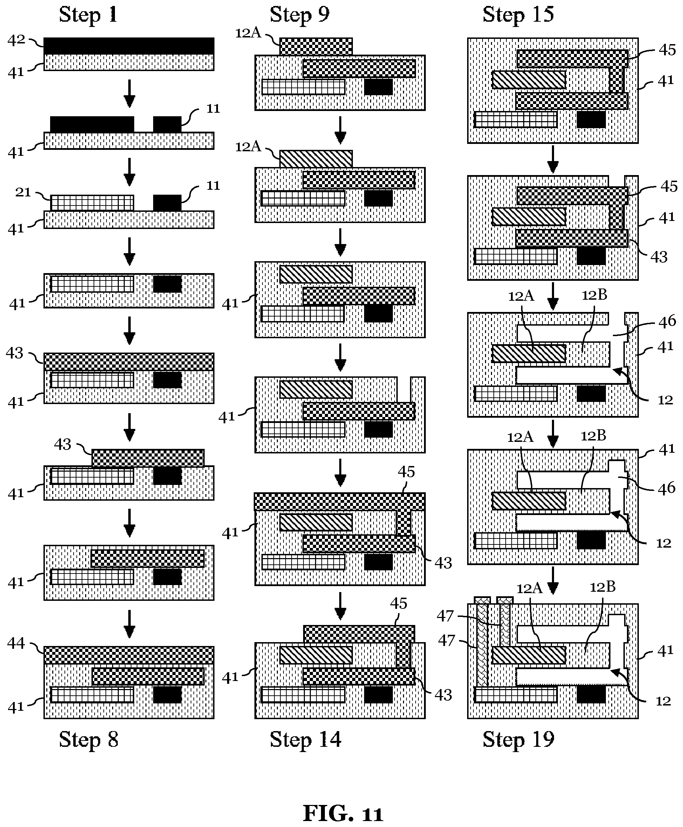

FIG. 11 shows steps of a method for fabricating the integrated optical structure 10 according to an embodiment.

The method comprises the formation of the optical waveguide structure 11 and the electrode structure 21. These structures can be formed by providing an insulator substrate, e.g. a silicon oxide substrate 41, with a silicon layer 42 on top, and subsequently patterning the silicon layer 42 (steps 1 and 2 in FIG. 11). The insulator substrate with the silicon layer can be provided in the form of a silicon-on-insulator (SOI) wafer. Note that there may be one or more extra material layers arranged under the insulator, for example a silicon, as the substrate. Such additional layers are omitted here to highlight the disclosed optical waveguide structure.

For instance, a first section of the patterned silicon layer 42 forms the waveguide structure 11 and a second section forms the electrode structure 21. The section forming the electrode structure 21 can be doped in subsequent step 3 to make it conductive.

The method further comprises the formation of the beam structure which is suspended at a first distance to the optical waveguide structure 11, and which comprises the first section 12A of the first material and the second section 12B of the second material, the first material being a conductive material and the second material being a non-conductive material or a semiconductor. Steps 4 to 18 in FIG. 11 show an exemplary process flow for forming such a beam structure above the electrode structure 21 and the waveguide structure 11.

First, a further silicon oxide layer 41 can be deposited to protect the waveguide and electrode structures 11, 21 (step 4). Then, a sacrificial layer 43 can be deposited on top of the silicon oxide layer 41 (step 5). This sacrificial layer 43 can form a bottom sacrificial layer and can be made of polycrystalline silicon. Subsequently, this bottom sacrificial layer 43 can be patterned and a further silicon oxide layer 41 can be deposited to protect the bottom sacrificial layer (steps 6 and 7).

Subsequently, a further material layer 44 can be deposited. This layer 44 can be a polycrystalline silicon or a metal layer, e.g. a Cu, Al layer, and can be subsequently structured to form the first section 12A of the beam structure (steps 8 and 9). If layer 44 is a polycrystalline layer it can be doped, as shown in step 10, to make it conductive. This step can be skipped if a metal is deposited in step 8.

In a subsequent step, a further silicon oxide layer 41 can be deposited to protect the first section 12A (step 11). Then, the silicon oxide layer 41 can be opened in a top section to expose the bottom sacrificial layer 43 (step 12). Subsequently, a further polycrystalline silicon can be deposited in and above the generated opening to form a top sacrificial layer 45 that is connected with the bottom sacrificial layer 43 (step 13). Subsequently, the top sacrificial layer 45 can be patterned and a further silicon oxide layer 41 can be deposited to protect the top sacrificial layer 45 (steps 14 and 15). The oxide layer(s) 41 can form an encapsulation structure around the optical waveguide structure 11, the beam structure 12 and the sacrificial layers 43, 45.

The top and bottom sacrificial layers 43, 45 can form a sacrificial structure around a section of the beam structure 12, which is exposed in a later steps. For instance, a part of the sacrificial structure, i.e. the bottom sacrificial layer 43, is thereby arranged between the beam structure 12 and the optical waveguide structure 11. The sacrificial structure can be arranged such that the beam structure 12, when exposed, is arranged in a parallel orientation to the optical waveguide structure 11.

In further step 16, the silicon oxide 41 can be opened to expose the top sacrificial layer 45. Then, the sacrificial structure (i.e., the top and bottom sacrificial layer 45, 43) can be removed, e.g. via an etching (step 17), to expose the beam structure 12. In particular, removing the sacrificial structure forms a cavity 46, wherein the beam structure 12 is suspended in the cavity 46 on one end. Advantageously, no protective liner layer needs to be deposited around the beam structure 12, which simplifies the fabrication process.

In subsequent step 18, a further silicon oxide layer 41 can be deposited to seal the cavity. In the example shown in FIG. 11, the second section 12B of the beam structure 12 is formed from the silicon oxide material at the free end of the beam structure 12.

Finally, the method comprises forming an electrical contact structure 47. The electrical contact structure 47 can be formed by processing metallic connection wires or lines, e.g. from tungsten or copper. These wires or lines can be used for delivering the driving voltage to the first section 12A and electrode structure 21. The connection wires or lines can be formed as metal-filled vias in the silicon oxide layer(s) 41.

During operation of the thus fabricated integrated optical structure, the electrical contact structure 47 is configured to apply a voltage between the electrode structure 21 and the first section 12A of the beam structure inducing the electrostatic force acting between these two elements. The beam structure 12 is designed to be elastically bent towards or away from the optical waveguide structure 11 by the electrostatic force causing the change in an optical property of the optical signal propagating through the optical waveguide structure 11.

In the claims as well as in the description of this disclosure, the word "comprising" does not exclude other elements or steps and the indefinite article "a" or "an" does not exclude a plurality. A single element may fulfill the functions of several entities or items recited in the claims. The mere fact that certain measures are recited in the mutual different dependent claims does not indicate that a combination of these measures cannot be used in an advantageous implementation.

## Claims

1. An integrated optical structure (10), comprising:
an optical waveguide structure (11);
a beam structure (12) which is suspended at a first distance to the optical waveguide structure (11), wherein the beam structure (12) comprises a first section (12A) of a first material and a second section (12B) of a second material, wherein the first material is a conductive material and the second material is a non-conductive material or a semiconductor;
an electrode structure (21) arranged at a second distance to the beam structure (12); and
an electrical contact structure configured to apply a voltage between the electrode structure (21) and the first section (12A) of the beam structure (12) inducing an electrostatic force acting between the electrode structure (21) and the first section (12A);
wherein the beam structure (12) is designed to be elastically bent towards or away from the optical waveguide structure (11) by the electrostatic force causing a change in an optical property, in particular a phase, of an optical signal propagating through the optical waveguide structure (11).

2. The integrated optical structure (10) of claim 1,
wherein the optical waveguide structure (11) is not in physical contact with the electrode structure (21).

3. The integrated optical structure (10) of claim 1 or 2,
wherein the beam structure (12) is suspended on one end;
wherein the first section (12A) is arranged towards the suspended end and/or the second section (12B) is arranged towards a free end of the beam structure (12).

4. The integrated optical structure (10) of any one of the preceding claims, wherein the second section (12B) is arranged directly above or below the optical waveguide structure (11) if the beam structure (12) is not bent.

5. The integrated optical structure (10) of any one of the preceding claims, wherein the first material is a metal or doped semiconductor, in particular doped silicon.

6. The integrated optical structure (10) of any one of the preceding claims, wherein the second material is silicon oxide or silicon nitride.

7. The integrated optical structure (10) of any one of the preceding claims,
wherein the beam structure (12) comprises a base structure (12C);
wherein the first section (12A) and/or the second section (12B) are embedded in the base structure (12C).

8. The integrated optical structure (10) of claim 7,
wherein the base structure (12C) is made of the same material as the second section (12B).

9. The integrated optical structure (10) of any one of the preceding claims, further comprising:
a supporting structure (14);
wherein the beam structure (12) is anchored to the supporting structure (14); and
wherein the optical waveguide structure (11) and/or the electrode structure (21) are arranged in or on the supporting structure (14).

10. The integrated optical structure (10) of any one of the preceding claims,
wherein the electrode structure (21) is arranged at the same side of the beam structure (12) as the optical waveguide structure (11), or
wherein the electrode structure (21) and the optical waveguide structure (11) are arranged on opposite sides of the beam structure (12).

11. The integrated optical structure (10) of any one of the preceding claims, comprising:
a further electrode structure (31) arranged at a third distance to the beam structure (12) on a side which is opposite to the electrode structure (21).

12. The integrated optical structure (10) of claim 11,
wherein the electrical contact structure is configured to apply a further voltage between the further electrode structure (31) and the first section (12A) of the beam structure (12) inducing a further electrostatic force acting between the further electrode and the first section (12A);
wherein the beam structure (12) is designed to be elastically bent towards or away from the further electrode structure (31) by the further electrostatic force.

13. An optical communication device comprising the integrated optical structure (10) of any one of the preceding claims.

14. The optical communication device of claim 13,
wherein the optical communication device is a Mach-Zehnder interferometer or an optical resonator, in particular a ring resonator.

15. A method of fabricating an integrated optical structure (10), comprising:
forming an optical waveguide structure (11);
forming a beam structure (12) which is suspended at a first distance to the optical waveguide structure (11), wherein the beam structure (12) comprises a first section (12A) of a first material and a second section (12B) of a second material, wherein the first material is a conductive material and the second material is a non-conductive material or a semiconductor;
forming an electrode structure (21) arranged at a second distance to the beam structure (12); and
forming an electrical contact structure which is configured to apply a voltage between the electrode structure (21) and the first section (12A) of the beam structure (12) inducing an electrostatic force acting between the electrode structure (21) and the first section (12A);
wherein the beam structure (12) is designed to be elastically bent towards or away from the optical waveguide structure (11) by the electrostatic force causing a change in an optical property, in particular a phase, of an optical signal propagating through the optical waveguide structure (11).
